# EUROPEAN PATENT APPLICATION

(11) **EP 2 680 620 A2**
(43) Date of publication of application: **01.01.2014**
(21) Application number: 13150769.1
(22) Date of filing: 10.01.2013
(51) Int. Cl.: H04W 4/02, H04W 4/16

(54) **System having location based proximity features and methods thereof**

(30) Priority: 10.02.2012 US 201213371302
(71) Applicant: Mitel Networks Corporation, Ottawa, ON K2K 2W7 (CA)
(72) Inventor: Hillier, Peter Matthew, Kanata, Ontario K2T 0E3 (CA)
(74) Representative: McDougall, James

(57) **Abstract**

A system having location based proximity features and methods thereof are described. A voicemail system can be accessed for a pre-recorded voicemail. When targets are within range they can get the message. The system can provide a callback feature allowing an originating device to be contacted when a device is detected within range of the defined location. The system can provide location based calling features. Participants within a geographic area can answer a call located within a range of the defined location. Conditional callbacks within a geographic area can be used for querying a group of selected parties within a location. The participants can decide to accept the call based on conditions placed by the caller. Ring groups for those participants can be established. Participants within a geographic area can be forwarded a call. Intelligent decision facilities can be part of determining whether to forward the call.

## Description

### TECHNICAL FIELD

This disclosure generally relates to communications, and more particularly, to communication functions provided within proximity of a defined location.

### BACKGROUND

Increasingly, phones have evolved into more powerful and feature-rich devices. These phones can now include such functions as personal digital assistant (PDA) capabilities, cameras, Internet access, WiFi access, etc. A number of software applications can be stored and/or run on the mobile devices in the same or similar manner as such applications are run on laptop or desktop computers. Unlike conventional cumbersome computers, the mobility of such phones enables applications that can provide features based on the mobility of such devices.

Some applications can provide location-based features. These features can include navigation systems, identifying locations of a person or object and determining whereabouts of a party. A number of features have been developed for determining and tracking the locations of mobile devices. Nevertheless, location based features have not been fully utilized in current phones. Phones within proximity of a location can receive benefits without being the intended target. A need therefore exists for a system having location based proximity features and methods thereof that overcome those issues described above. These, as well as other related advantages, will be described in the present disclosure.

### BRIEF DESCRIPTION OF DRAWINGS

The novel features believed to be characteristic of the disclosure are set forth in the appended claims. In the descriptions that follow, like parts are marked throughout the specification and drawings with the same numerals, respectively. The drawing **FIGURES** are not necessarily drawn to scale and certain **FIGURES** can be shown in exaggerated or generalized form in the interest of clarity and conciseness. The disclosure itself, however, as well as a preferred mode of use, further objectives and advantages thereof, will be best understood by reference to the following detailed description of illustrative embodiments when read in conjunction with the accompanying drawings, wherein:
**FIGURE 1** is a block diagram illustrating an exemplary system for providing location based proximity services in accordance with one or more aspects of the present disclosure;
**FIGURE 2** is a block diagram of an exemplary device for implementing location based proximity services in accordance with one or more aspects of the present disclosure;
**FIGURE 3** is a block diagram of an illustrative server with components for processing location based proximity services in accordance with one or more aspects of the present disclosure;
**FIGURE 4** is a block diagram for providing illustrative location based voicemails and proximate user notifications through the exemplary system in accordance with one or more aspects of the present disclosure;
**FIGURE 5** is a flow chart depicting illustrative processes for setting up a voicemail message in accordance with one or more aspects of the present disclosure;
**FIGURE 6** is a flow chart depicting illustrative processes for message delivery in accordance with one or more aspects of the present disclosure;
**FIGURE 7** is a block diagram for providing an illustrative location based proximate callback through the exemplary system in accordance with one or more aspects of the present disclosure;
**FIGURE 8** is a flow chart depicting illustrative processes for setting up a callback in accordance with one or more aspects of the present disclosure;
**FIGURE 9** is a flow chart depicting illustrative processes for callback organization in accordance with one or more aspects of the present disclosure;
**FIGURE 10** is a block diagram for providing illustrative location based calls through the exemplary system in accordance with one or more aspects of the present disclosure;
**FIGURE 11** is a flow chart depicting illustrative processes for calling a location in accordance with one or more aspects of the present disclosure;
**FIGURE 12** is a flow chart depicting illustrative processes for ring group generation in accordance with one or more aspects of the present disclosure;
**FIGURE 13** is a flow chart depicting illustrative processes for providing conditional callbacks in accordance with one or more aspects of the present disclosure;
**FIGURE 14** is a block diagram for providing illustrative call forwarding to a proximate party through the exemplary system in accordance with one or more aspects of the present disclosure; and
**FIGURE 15** is a flow chart depicting illustrative processes for providing call forwarding in accordance with one or more aspects of the present disclosure.

### DESCRIPTION OF THE DISCLOSURE

The description set forth below in connection with the appended drawings is intended as a description of presently preferred embodiments of the disclosure and is not intended to represent the only forms in which the present disclosure can be constructed and/or utilized. The description sets forth the functions and the sequence of steps for constructing and operating the disclosure in connection with the illustrated embodiments. It is to be understood, however, that the same or equivalent functions and sequences can be accomplished by different embodiments that are also intended to be encompassed within the spirit and scope of this disclosure.

The present disclosure relates to communications, and more particularly, to a system having location based proximity features and methods thereof. The present disclosure describes the system and method, by way of non-limiting examples only, with particular applicability to global positioning systems (GPSs), carrier towers, WiFi markers, triangulation, near field communications (NFCs), radio frequency identification (RFID) or other concepts that can be used to derive location. In an illustrative embodiment, the system can provide communication functions that can be taken advantage of by devices that are proximate to a location. By defining a location and identifying at least one device within range of the location, communication functions can be provided to the at least one device. For example, a voicemail system can be attached to the location and when a participant gets close enough, they can be notified and be given access to a pre-recorded voicemail. The system can also provide a callback feature allowing an originating device to be contacted when another device is detected within range of the defined location.

In other illustrative embodiments, the system can provide location based calling features. A caller can make a call to a geographical location and participants within range of that defined location can answer the call. Conditional callbacks within a geographic area can be used for querying a group of selected parties within a location. The participants can decide to accept the call based on conditions placed by the caller. Ring groups for those participants can be established internally to the system. Participants within a geographic area can also be forwarded a call. Intelligent decision facilities can be part of determining whether to forward the call.

As shown, a number of attributes can be applicable to the examples described above. Common among the communication functions can be a location point. By way of example, a location point can be a physical GPS location. The location point can be a person or other object that is in motion provided that the person or object reports its location changes such that the "range" can be recalculated with respect to finding candidates. Another common attribute between the communication functions can be that the server coordinating the voice, video, data or chat exchange does not have to provide caller identification or contact information. The server is able to initiate communications without sharing this information between connected parties.

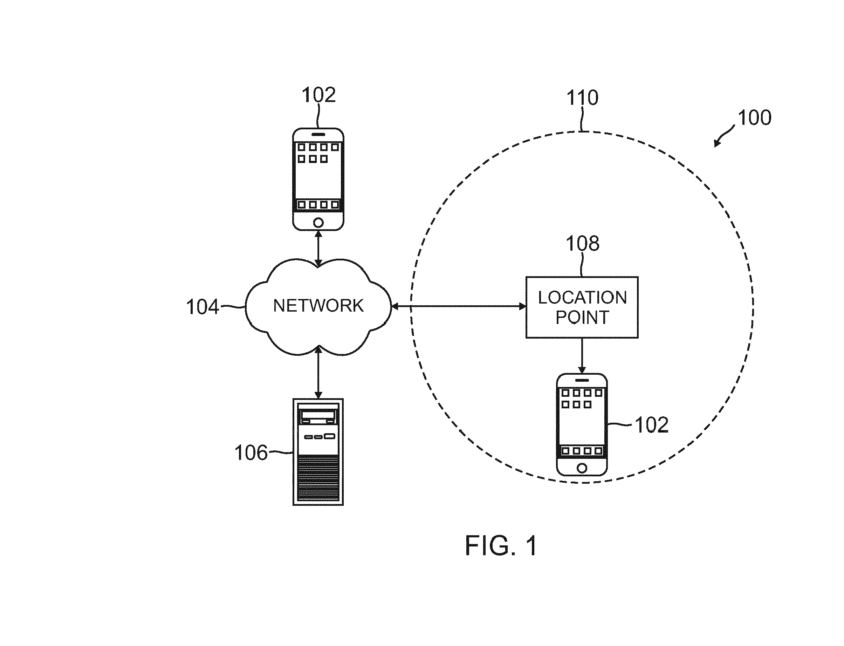

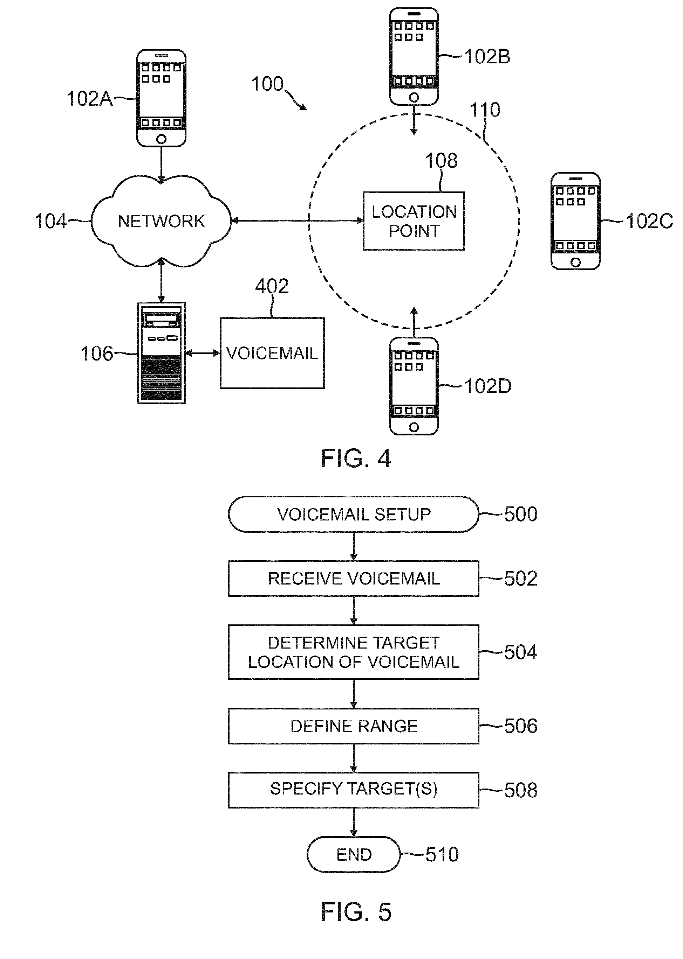

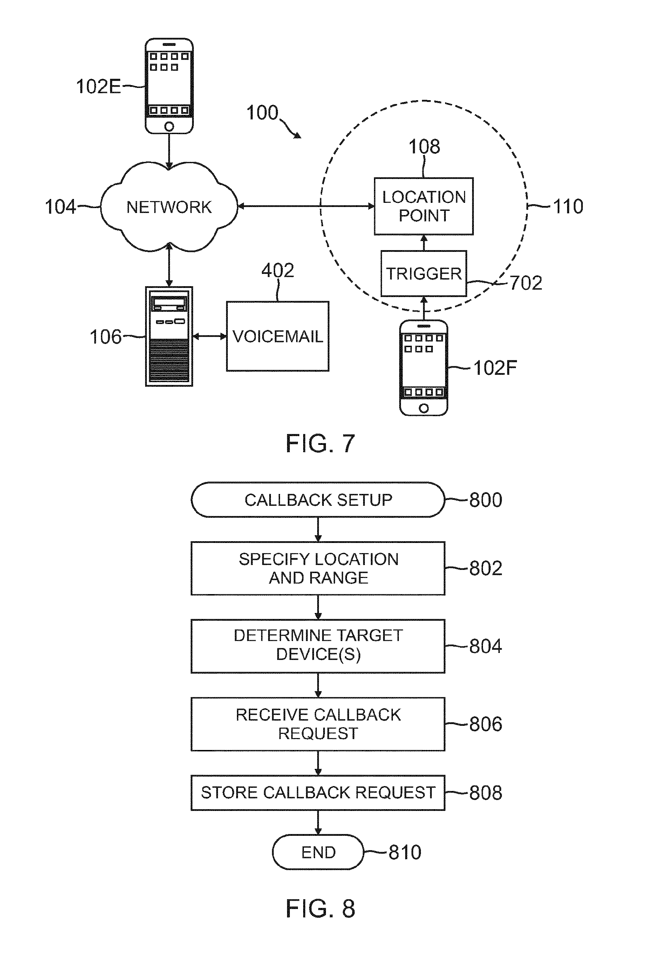

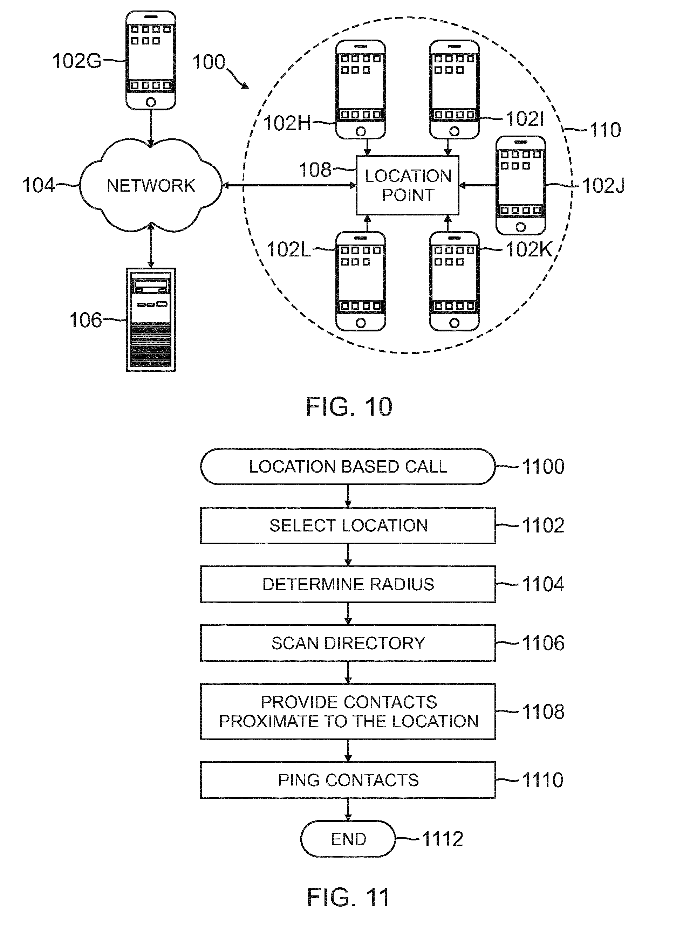

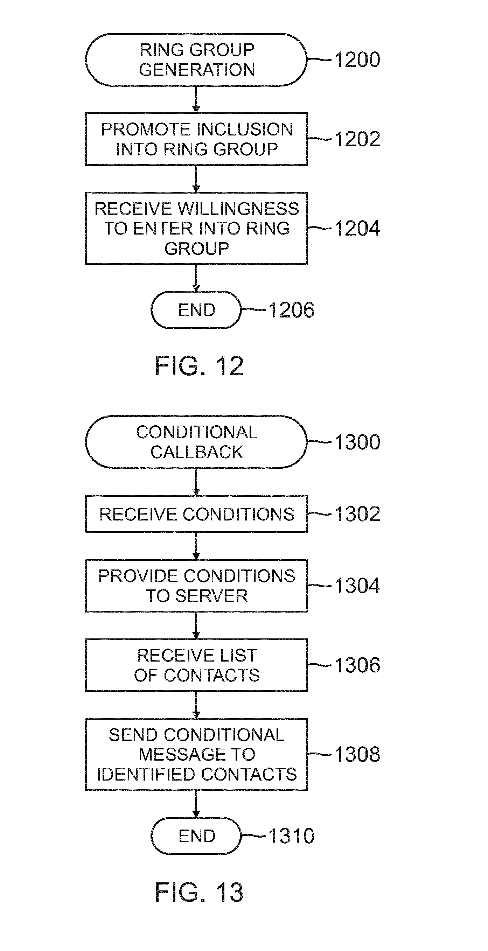

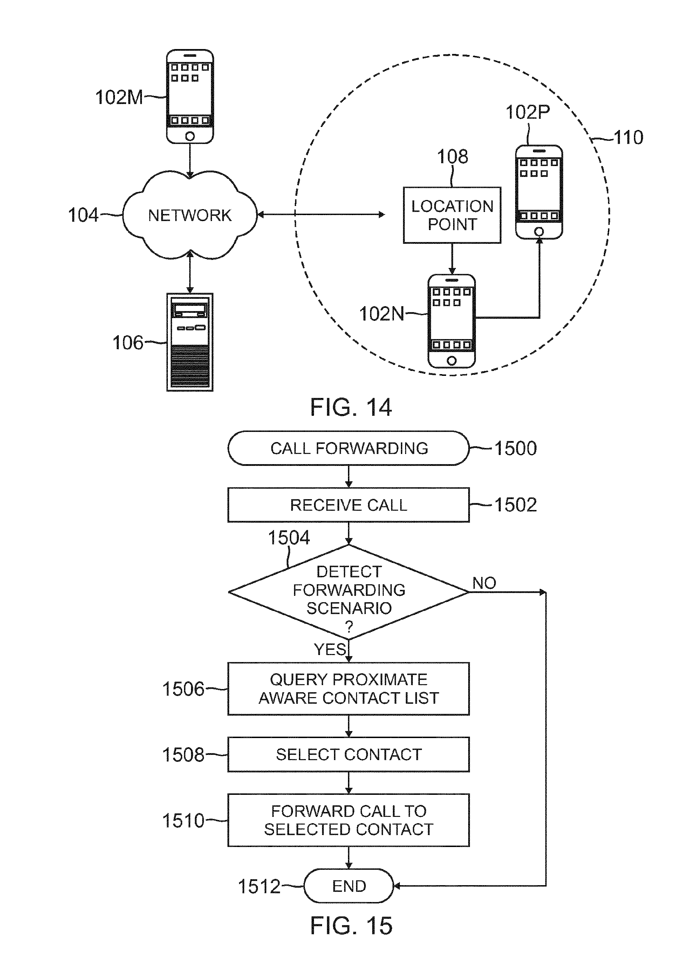

An exemplary system facilitating location based proximity features will be described in **FIGURES 1** through **3****.** **FIGURES 4** through **6** depict location based voicemails and proximate user notifications through the exemplary system, while **FIGURES 7** through **9** show location based proximate callbacks. **FIGURES 10** and **11** illustrate location based calls through the exemplary system. **FIGURE 12** depicts ring group generation and **FIGURE 13** shows conditional callbacks. Call forwarding is provided in **FIGURES 14** and **15****.** While these communication functions are described individually, they can be individually implemented or combined as desired.

**FIGURE 1** is a block diagram illustrating an exemplary system **100** for providing location based proximity services in accordance with one or more aspects of the present disclosure. The system **100** can provide at least one of a plurality of communication functions to devices **102** proximate to a location point **108.** Devices **102** within range can communicate with a network **104** near the location point **108.** For example, a device **102** that is located within the geographic area **110** in range of the location point **108** can communicate with the network **104,** while a second device **102** outside of the geographic area **110** cannot.

The location point **108** can be defined as a GPS address, or other coordinate system. The mobile devices **102** can communicate via a carrier or WiFi to relay their location, which can be obtained from their internal GPS, carrier tower triangulation or WiFi connection. The server **106** can determine if a mobile device **102** is in the desired area **110** of the location point **108.** This calculation can determine whether or not to trigger functionality. As such, generally, the location point **108** does not need to provide services to mobile devices **102** nor is it connected to **104.** By way of a non-limiting example, the location point **108** can be a point in the middle of the woods near a cliff, and it can trigger a call between the person and the park ranger so that the park ranger can instruct that person they are in a dangerous area and need to get back onto the path.

Instead of a client-server model as discussed in the present disclosure, communication functions can feature peer-to-peer connections if the users are not "anonymous". As long as contacts in a user's mobile device **102** report their location, these communication functions can work directly on the device **102.** Alternately, the user can send their location to their contacts and they can respond with proximity information such that the user does not know their exact location if they do not wish to share it. For example, if the user added a callback on a party so that the user can get a call when the party arrives at the office, the user's phone would request the party's phone to provide a proximity update relative to the party's office. When the party arrives at the office, the user would be alerted. The user can then answer it. The party through the party's phone would be alerted. In this scenario, no server **106** is involved.

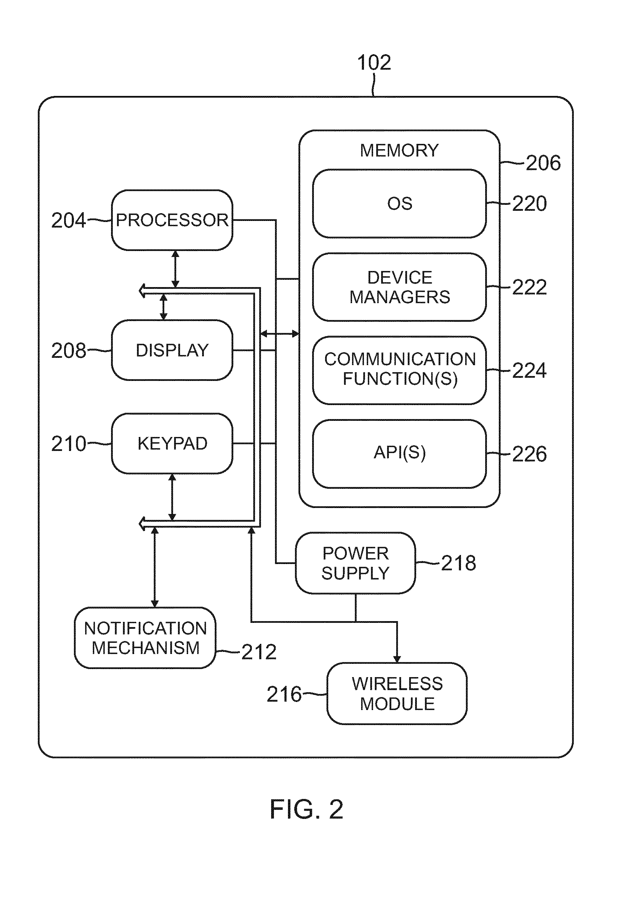

**FIGURE 2** is a block diagram of an exemplary device **102** for implementing location based proximity services in accordance with one or more aspects of the present disclosure. The device **102** can be, for example, a phone, tablet, desktop and laptop computer. In typical embodiments, the device **102** can have a processor **204** for implementing logic, a memory **206,** a display **208** and a keypad **210.** The display **208** of the device **102** can be a liquid crystal display (LCD), or any other type of display commonly used in devices **102.** The display **208** can be touch-sensitive, and can act as an input device. The keypad **210** can be a push button numeric dialing pad (such as on a typical telephone), a multi-key keyboard (such as a conventional keyboard), or any other device for inputting textual data.

The memory **206** generally includes both volatile memory (e.g., RAM) and non-volatile memory (e.g., ROM, Flash Memory, or the like). The non-volatile portion of the memory **206** can be used to store persistent information which should not be lost when the device **102** is powered down. The device **102** can include an operating system (OS) **220,** such as Windows CE® or Windows Mobile® available from Microsoft Corporation, Android™ from Google, or other OS. The OS can reside in the memory **206** and be executed on the processor **204.**

The memory **206** can also include one or more device managers **222** for interacting with one or more I/O devices. The device managers **222** can be software installed on the device **102.** A device manager **222** can correspond to each I/O device. In addition to the device manager **222,** components for at least one communication function **224** can be loaded into memory **206** and run on or in association with the operating system **220.** The components of the communication functions **224** can be integrated with features provided by the server **106.** In some embodiments, the communication functions can be implemented outside the device **102.**

The memory **206** can also include a collection of one or more APIs **226** for facilitating wireless communication between the device **102** and one or more remote I/O devices. The APIs **226** can be invoked by the communication functions **224** to recognize and control the one or more remote I/O devices. In this manner, the device **102** is able to take advantage of services or functionalities of the one or more remote I/O devices.

The device **102** can also include a power supply **218,** which can be implemented as one or more batteries, fuel cells, or other sources of electrical power. The power supply **218** might further include an external power source, such as an AC adapter or a powered docking cradle that supplements or recharges the batteries. The device **102** can include one or more audio, visual, and/or vibratory notification mechanisms **212.** The mobile device **102** can also include a wireless module **216,** such as a WiFi module that facilitates wireless connectivity.

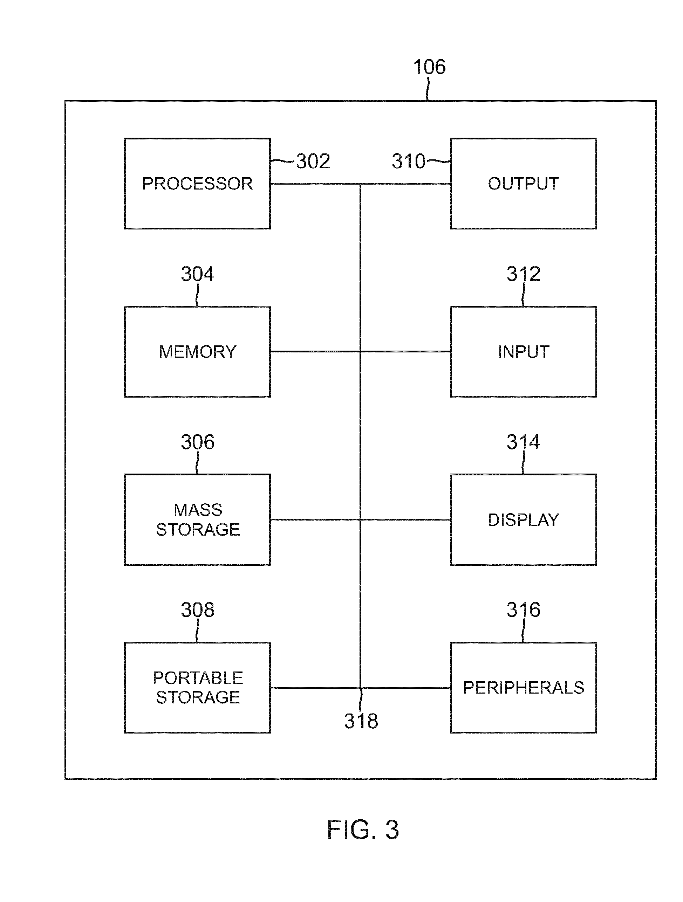

**FIGURE 3** is a block diagram of an illustrative server **106** with components for processing location based proximity services in accordance with one or more aspects of the present disclosure. The server **106** can be used to implement communication functions separate from the device **102.** The server **106** can include one or more processors **302** and memory **304.** The main memory **304** can store, in part, instructions and data for execution by the processor **302.** The main memory **304** can store the executable code when in operation. The server **106** can further include a mass storage device **306,** portable storage medium drive(s) **308,** output devices **310,** user input devices **312,** display **314** and peripheral devices **316.**

The components are depicted as being connected via a single bus **318.** However, the components can be connected through one or more data transport means. For example, the processor unit **302** and the main memory **304** can be connected via a local microprocessor bus, and the mass storage device **306,** peripheral device(s) **316,** the portable storage device **308,** and the display **314** can be connected via one or more input/output (I/O) buses.

Through the system **100** described above, at least one of a plurality of communication functions can be provided. **FIGURE 4** is a block diagram for providing illustrative location based voicemails and proximate user notifications through the exemplary system **100** in accordance with one or more aspects of the present disclosure. For purposes of illustration, suppose, for example, that several colleagues are heading to an out of town convention. Their business can have a booth that needs to be set up at a presentation hall. The equipment is late arriving, and the marketing manager finally receives a call that the equipment for their booth has arrived at the destination city's airport cargo outlet. The marketing manager generally has no concept of who will arrive at the destination airport first. Nevertheless, through the use of the voicemail service **402** of **FIGURE 4****,** they can leave a message at the location point **108** of the airport, and the first employee to reach the airport can be notified that they have a voice message. The information can be relayed to pick up the package.

In another illustration, customer relations management can be accomplished through the system **100** of **FIGURE 4****.** For example, a small business owner can be interested in a new product and request for a sample to be dropped off at their business that is within a geographic area **110.** A voicemail message for the first sales representative within **20** kilometers, or other defined distance, can kindly drop off a sample to this customer. The first sales representative that comes within range of the location point **108** can get the voicemail indication. When they retrieve their message, they can fulfill the request to provide a sample. If the voicemail is not delivered within a predefined timeframe, the scope of target delivery zone can expand to increase the chance of targeting a sales representative. Otherwise, the voicemail message can expire.

Generally described, the system **100** of **FIGURE 4** can provide a voicemail service **402** where mail boxes are dynamically defined by the location point **108.** Messages can be, for example, targeted towards qualified recipients within range of the location where the message was left. The system **100** can qualify devices **102B, 102C** and **102D** as anonymous or more complex such as a specific individual or group of individuals.

The voicemail service **402** can be connected to the server **106** directly or through one or more networks **104.** When devices **102B** and **102D** enter into the geographic area **110** within range of the location point **108**, they can be provided with the message stored in the voicemail service **402.** Typically, the first device **102B** or **102D** entering into the area **110** can be provided the message. Alternatively, each device **102B** and **102D** entering into the area **110** can be provided the message upon arrival within the area **110.**

Advantageously, the voicemail service **402** can provide a message to a geographic area **110** and unspecified individuals. The voicemail service **402** is typically not associated with a user account as this can denote static modeling. The intended device **102B, 102C** or **102D** can be anonymous, belong to a group or be an individual. A message waiting indication (MWI) is generally not provided until a qualified device **102B, 102C** and **102D** is identified. If information about the user is known, for example cellular subscriber information, the voicemail service **402** can forward the voicemail to an appropriate network mailbox for a more integrated delivery.

The message range can be set to denote a target area **110** around the location point **108** for a device **102B, 102C** or **102D** to enter. In some embodiments, the message can be encrypted such that it can be understood between the sender and recipient(s). This can replace typical voicemail box login and password security. The message can be 1-to-1 (specific recipient), 1-to-any (first come, first serve) or 1-to-many (numerous recipients). The message from the voicemail service **402** can be deleted after qualified recipients have received it or after a specific period of time. In some embodiments, after a device **102B, 102C** or **102D** receives it, other devices **102B, 102C** or **102D** can be prevented from acquiring the message.

The voicemail service **402** can be capable of notifying devices **102B, 102C** and **102D** when a location based voicemail box is available. The service **402** can be fixed to a given location, for example, a hotel, in localized network cases. Alternately, the service **402** can always be "on" in the case of a larger organizational coverage such as a carrier network **104.** The age of the message can dictate a larger range or priority, if applicable, to increase the likelihood of delivering the message to a target device **102B, 102C** and **102D.**

**FIGURE 5** is a flow chart depicting illustrative processes for setting up a voicemail message in accordance with one or more aspects of the present disclosure. The processes can begin at **block 500.** In some embodiments, a client application on device **102A** outside the geographic area **110** can be used. The application can be used to communicate with the voicemail service **402** through the network **104.** The device **102A** establishing the message for the voicemail service **402** can also be within the area **110,** not shown.

Through the device **102A,** a voicemail can be setup and received by the voicemail service **402** at **block 502.** In some embodiments, the message can be associated with a time frame for which the message is applicable. For example, the user establishing the voicemail can define a two hour window for which the message can be picked up. After the expiration of this period, the voicemail is no longer available.

At **block 504,** the voicemail service **402** can determine a target location by receiving information from the device **102A** establishing the voicemail. The service **402** can use the caller's current location or accept an alternate location. This location point **108** can be provided via voice recognition, GPS coordinates, graphical interface using a map, etc. The client application can allow the sender of the message to specify a range around the location point **108** to which the target coverage can extend at **block 506.** Continuing with the illustration described above, the range for the employees setting up the booth can be the airport and does not necessarily have to take on a circular shape shown in **FIGURE 4****.** The range or area **110** can be defined by the environment.

At **block 508,** the client application can allow the sender to specify whether or not the message is for a specific target, group of targets or other user. Target devices **102B, 102C** and **102D** can be grouped within ring groups, which will be described in more details below. Employment details, rankings, etc. can be used to determine whether individuals should be grouped and whether they can receive the message stored in the voicemail service **402.** In some embodiments, the voicemail message can be forwarded to a local mailbox. While one server **106** was depicted within **FIGURE 4****,** additional servers can be provided and attached through networks that support devices **102A, 102B, 102C** and **102D** within the geographic area **110.** The processes for setting up the voicemail can end at **block 510.**

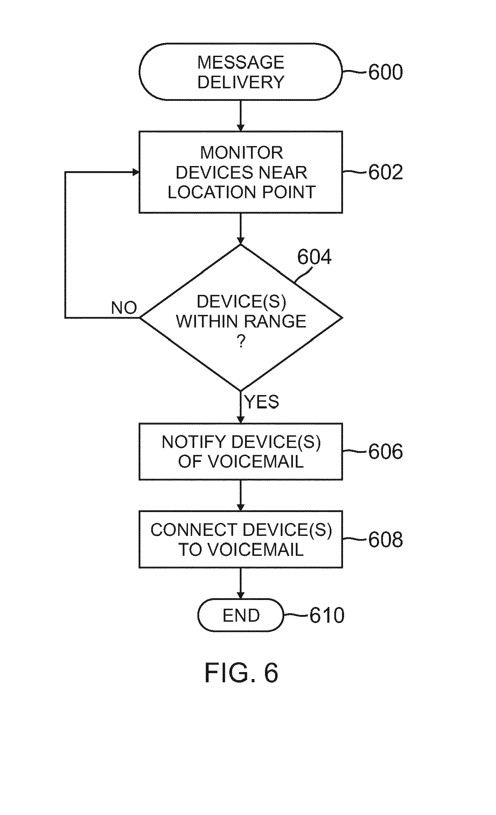

**FIGURE 6** is a flow chart depicting illustrative processes for message delivery in accordance with one or more aspects of the present disclosure. The processes can begin at **block 600.** With a message recorded and stored within the voicemail service **402,** the message can be delivered to target devices **102B, 102C** and **102D** defined within **FIGURE 5****.** At **block 602,** the server **106** connected with the network **104** can monitor devices **102B, 102C** and **102D** near the location point **108.** Client applications of the devices **102B, 102C** and **102D** can periodically report their location to the server **106.** This reporting can be constant, or server activated, depending on the server and client (solution) configuration. For example, if Jane leaves John a message for when he gets home, the server **106** can send a message to activate John's location reporting so that the message can be delivered when required. As described above, peer-to-peer connections can also be used.

At decision **block 604,** a determination can be made whether at least one device **102B, 102C** or **102D** is within range of the location point **108.** If not, the server **106** can continue to monitor devices **102B, 102C** and **102D** that enter into the geographic area **110.** In some embodiments, the client application can reports its contact information whereby the server **106** can determine whether the device **102** is an appropriate contact to send the voicemail to. The device **102B, 102C** or **102D** can send its carrier number, IP address, etc. This can allow the server **106** to contact the client when a message is pending. When a message is targeted towards a group of users, the server **106** can monitor those users for proximity.

When a user is within range, the client application is notified that a voicemail is pending from the server **106** at **block 606.** The user can activate their client and connect to the voicemail service **402** to retrieve the message at **block 608.** The server **106** can optionally challenge the client for credentials. Optionally, the message itself can be encrypted and can require a certificate or pre-shared key to decipher. The processes can end at **block 610.**

The client/server communication can employ VoIP based communications, such as SIP to facilitate message delivery. In some embodiments, the client devices **102B, 102C** and **102D** do not report their location unless a message has been left for them. The server **106** can signal the devices **102B, 102C** and **102D** to initiate location reporting until such time as the message is received or times out. The client application can be a separate application with unique user identification to denote end users. The mobile IP address can be used to deliver message notifications. A peer-to-peer model can be used, where a voice message is left on the senders' device and delivered to a recipient when they are proximate to the user.

A number of variations to the previous system **100** described in **FIGURE 4** can be provided. Visual voicemail, that is voicemail-to-email transcoding, can work seamlessly within the system **100** provided the transcoding can be done once the relationship between the message and intended recipient is resolved. This can support late binding. Any type of communication service, such as text message, where the sender and recipient can be transient to a location and wish to use the location point **108** as the common intersect point to define a relationship can be used.

In some embodiments, the location point **108** is not static but can move. The location point **108** can be on a device **102,** not shown within **FIGURE 4****.** This can imply a "moving target zone" or location point **108** along with a moving area **110,** and it is possible that a stationary device **102** can suddenly move in range because the location point **108** has moved proximate to the device **102.** For purposes of illustration, suppose that a pizza driver has a pizza that was refused because it was the wrong type. The driver can set a message based on their location that they have an extra large supreme pizza for 10 dollars. As the driver drives back to the shop, people within range can be notified and can respond.

**FIGURE 7** is a block diagram for providing an illustrative location based proximate callback through the exemplary system **100** in accordance with one or more aspects of the present disclosure. By way of a non-limiting example, suppose John has set up an interview with Jane at 9:00 AM on Monday morning. Because he is not certain which room he will be available in, he cannot provide the appropriate details to Jane. John also knows he has a habit of getting pretty busy at work and forgetting appointments, so he decides to leave a location based callback to not only remind himself of the meeting, but also so that he can inform Jane which room she needs to go to upon arrival.

Through the system **100,** John can set the radius of the callback to 1 kilometer, or other defined distance, implying that once Jane is within range of his work, the system **100** can contact John. Upon answering, the system **100** can extend the call to Jane. The call can follow traditional callback concepts, but the trigger **702** can rely on the location point **108** established by John. The system **100** can provide John the chance to relay the updated room information to Jane and allow him to finish off his work and head to the front entrance to greet Jane properly.

In another illustration, John can set up a message within the voicemail service **402** to notify him when Jane arrives at the airport for pickup. The location point **108** can be established as the airport by John and a reminder notice can be stored within the voicemail service **402.** When Jane's plane arrives, the voicemail can be provided to John automatically. A number of other various scenarios can exist and are not limited to those described above.

Generally described, the system **100** of **FIGURE 7** can provide the ability to trigger a callback scenario based on one or more targets in proximity to each other or a given location as the trigger **702** to initiate the call. The system **100** can advantageously provide a callback that can be set without any previous context, for example, the user does not need to call the person first. The originator can set the callback to be specific to a location point **108** and specify the range or scope of the callback. A qualified person can be an anonymous user or a specific individual or group of individuals specified by the callback originator.

The callback can allow a qualified user who approaches the target to activate the callback. A single instance callback can allow the first qualified user who approaches the target to activate the callback. A multi-instance callback can allow a callback until all identified targets are notified. The callback can also be time dependent allowing a callback for a certain time. Combinations of these variations can be used. The proximity associated with callback completion can be bi-directional. For example, the callback can trigger a call between parties provided both parties are in proximity to the location point **108.**

The user can set the target location point **108** to reflect their own personal location, such that the callback can be triggered when the users are proximate to each other. The current personal location point **108** can move with the originator, implying a moving target zone. A conference callback can occur when more than one qualified device **102F** enters the target range at a given time. Specifically, if the originator is already engaged in a conversation with a previous target, the new target can result in a conference between the parties. The callback originator can set a "third party" callback such that it can originate a call between the first two qualified users, which does not include the originating device **102E** of the callback. Likewise, the originator could specify the location point **108** as another individual or object, creating a moving third party target area **110.**

As shown in **FIGURE 7****,** the callback originating device **102E** can be the person setting up the callback, for example, the device **102E** connected directly to the network **104.** Alternatively, the device **102E** can be within the geographic area **110** defined within a range of the location point **108.** The target area **110** can be the location point **108** plus an optional radius to define the scope of the callback. A qualified target can be an individual that meets the criteria of the callback. An anonymous callback can imply that the qualified target is unknown and the callback can be triggered by a user device **102F** in the target zone. A specific target can imply that the qualified target is known and the callback can be triggered when that target is in target zone.

The system **100** can include a triggering device **102F,** such as a smart phone, tablet, net-book or laptop, which is voice capable and able to report its location either automatically or via user updates. The originating device **102E** providing the voicemail can be a stationary or mobile device. It can also be recognized that the message can be provided by one originating device **102E** and another originating device **102E** can be used to receive the message from the voicemail service **402.**

A component on the server **106** can also be included, or this can be integrated into the client to support peer-to-peer network exchange of information. The individuals involved in the callback can be anonymous or selected from a pool of individuals, for example, via the contact list of the originating device **102E.** Groups do not need to be well known or predefined, for example, a group formation is ad-hoc and defined by the callback originator.

The client application on the device **102F** within the geographic area **110** can report its location periodically to the server **106.** This can be done continuously if the client is configured to accept anonymous callbacks or on-demand if the server **106** detects a specific callback has been initiated for that client. In the case of a specified callback, the intended target(s) can be requested to begin updating their location. Optionally, on clients that do not support location based reporting, the user can have an interface that allows the user to update their location manually, which can then transmit the location to the server **106.** For example, the client device **102F** can have a drop down list of common locations, such as "home", "office", "gym" and so forth.

**FIGURE 8** is a flow chart depicting illustrative processes for setting up a callback in accordance with one or more aspects of the present disclosure. The processes can begin at **block 800.** At **block 802,** the callback originator can activate a callback by specifying the target location point **108** and range. The geographic area **110** can be an area defined by a radius around the location point **108** or through some other mechanism. GPS coordinates can be provided to define the location point **108.** If a location is not specified, the originators position can be used as the location point **108.**

At **block 804,** a target device **102F** or group of target devices **102** can be located to begin the trigger **702** of the callback. In some embodiments, the targets can be anonymous, for example, any device **102** entering within the geographic area **110** can cause the trigger **702.** Directed targeting for devices **102** can also be implemented. The radius can be defaulted or specified per callback. At **block 806,** a callback can be left by an originating party. As shown in **FIGURE 7****,** the originating device **102E** can be outside the area **110.** In some embodiments, with the single press of a button on the client device **102E,** a callback request can be made. The user can navigate their contact list and tag several individuals, then press the callback button to initiate a callback to a collection of users using the current location point **108** and default radius. When an individual enters within the area **110,** a trigger **702** can activate the callback.

In some embodiments, the user of an originating device **102E** can access a map and select the location of the callback. An option on the GPS or mapping application can supply a "callback" option or the coordinates can be transferred to the callback client application using several existing methods. Similarly, the radius of the callback can be set using existing GPS or mapping techniques, such as gestures, to expand or contract the radius of the callback. The callback range can increase over time. This can be based on a "priority" setting of the callback, or time-to-live (TTL), whereby the target zone expands over time as the TTL matures.

If the callback originator specifies one or more targets, the server **106** can request those client devices **102F** to begin reporting their position using randomly generated, unique client identifications. Once this request is made, the server **106** can discard the contact information of the client for security purposes. At this point, the server **106** has no binding between the client contact and location. Instead, it can use the client identification as an index to store that client's location updates. At **block 808,** the server **106** can store the callback in the voicemail service **402.** The callback while shown as being stored as a voicemail can take the form of other media such as a text. The processes can end at **block 810.**

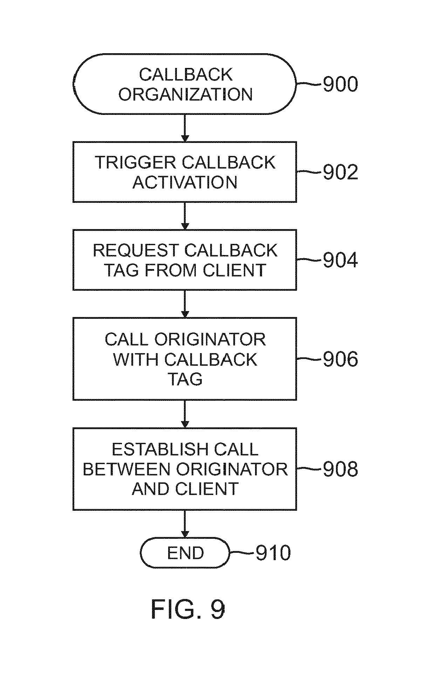

**FIGURE 9** is a flow chart depicting illustrative processes for callback organization in accordance with one or more aspects of the present disclosure. The processes can begin at **block 900.** The server **106** can have a callback target area **110** and the originator's contact information. The one or more clients can begin reporting their location. The unique client identification provided by the client device **102F** with its periodic location updates can be used to reference the applicable callback and client entry.

At **block 902,** if and when a client device **102F** enters the geographic area **110** for the callback, the server **106** can produce a trigger **702** for callback activation. The trigger **702** can be produced at the location point **108** or on the device **102F** entering into the area **110.** The server **106** can request contact information from the target client device **102F** at **block 904,** for example, in the form of a tag. The system **100,** at **block 906,** can call the originating device **102E** with the callback tag. The callback tag can be displayed to the originating device **102E** and the location and the target name can be pulled from this information. When the originator answers the call, the call can be extended to the target device **102F** that entered within the area **110.** At **block 908,** a call or other type of communication can be established between the originator and the client. If the target is busy or not answering, traditional callback methods can be employed. In some embodiments, the client reports its contact information in response to the callback server **106** if it is able to take the call. The processes can end at block **910.**

The general context of calling a location, answering a call at a location, location based ring groups, callbacks and conditional callbacks can employ those processed described above with respect to **FIGURE 9****.** These communication functions will be described below. Generally, the parties do not obtain direct location information, caller names, caller numbers, etc. that can be used to facilitate further contact in the future. This can provide added security to the system **100.**

A number of variations to the system **100** described above can be provided for callbacks. When an originating device **102E** is configured to accept anonymous callbacks, it can always broadcast its location to the server **106,** for example, through the network **104.** Typically, the device **102E** can send a NULL client identification. In turn, this can trigger the server **106** to generate a unique identification for the newly discovered client device **102F.** Similar to specified callbacks, when the client reports its location, the server **106** can actively scan its callback target zones. However, with anonymous callbacks, callbacks supporting anonymous users are scanned for a match. With specified callbacks, the client identification can be used to search the callbacks applicable to the client.

In some embodiments, each time a client device **102F** reports its location using the server generated unique identification, it can provide an address to which a response can be sent. This can be an IP address or other form of communication identification. This can provide a brief and temporary return address that the server **106** can use to contact the client device **102F** if a callback target zone is matched. Once the server **106** scans the callback targets and no match is found, this address can be dropped. Typically, the server **106** does not permanently store the address of a client device **102F** except the originating device **102E.**

The client contact address provided in the location update, in some embodiments, is not the final address used for connecting the call. For example, the temporary address may be the IP address and port of the client application, and when a match is found, the server **106** can reply to this address to request the telephony contact information. The client can then provide its carrier or PBX number. This can allow the client/server connection to be more secure, and optionally employ some form of authentication/encryption.

The unique client identification can simultaneously be used for anonymous and targeted callbacks. This is managed by the server **106,** which can maintain a list of anonymous callbacks and targeted callbacks. The client identification can be composed such that the server **106** can identify whether it was generated for anonymous usage or not, such that the anonymous callback list is scanned and the targeted list is scanned. Otherwise the identification can be used for specified callbacks and the anonymous list is not scanned.

The server **106** can scan the anonymous list using the location point **108.** The server **106** can scan the targeted list using the client identification. A client identification can belong to more than one specified callback or several anonymous callbacks. The server **106** can mitigate collisions by employing conflict resolution, such as providing priority to specified callbacks over anonymous, or "first come, first serve" or "round robin" on multiple callback target matches within the anonymous or specified list.

Upon connection, the callback can be deleted. Optionally, the callback can persist for a period of time or until all specified targets are notified. The telephony network **104** can be carrier based, private/public WiFi, private GSM, etc. In some embodiments, the client device **102F** can always report, regardless of whether it is in the geographic area **110.** The server **106** can store the client contact information and the client is not requested to provide its contact data when its location matches a target zone. This callback can be initiated immediately since the server **106** has the contact data.

As noted above, a model was defined where users can report their location "anonymously". Neither party generally knows the location of the other, or their contact information (number, name, etc). This can be controlled by the server **106** and provide complete security and anonymity. Redial, call logs, etc. typically would not be used to reestablish the call at a later date. The person's name would not be used to find alternate contact information. The two parties connected in this fashion can provide their contact information via another means if they wish to be contacted outside of the callback model.

In another configuration of the system **100** provided in **FIGURE 7****,** the callback originator can make a callback dependent on their presence in the callback area **110.** When the originator leaves the callback target zone, the callback can be deactivated. The callback can be deleted or persist, but can remain inactive until the next time the originator enters the target area **110.** The callback originator can also make the callback target area **110** proximate to their personal location such that the target zone moves with the originator. The callback can be activated when a qualified target device **102F** is with range of the originator. In this instance, the location associated with the callback is updated by the originating device **102E** using the identical client identification/location reporting concept.

A location based callback can automatically trigger a conference if the callback originator has set the rules such that more than one targeted individual can activate the callback. This can result in a conference taking place as users come into range of some location point **108.** If this is not enabled, the callback can fail to mature since the server **106** is not able to complete the first leg of the call.

The originator can also specify a "third party callback", where they can specify another number to contact rather than their own. Extending this, the originator can specify that the callback is to be triggered when the first two qualified targets are within the target zone. This can imply that a call can be originated between two anonymous users simply by their mutual proximity to a location point **108.** The system **100** can be used with social media, dating services, marketing/events and advertising.

**FIGURE 10** is a block diagram for providing illustrative location based calls through the exemplary system **100** in accordance with one or more aspects of the present disclosure. For purposes of illustration, suppose Joe owns a coffee distribution company and supplies many Ottawa companies with their coffee and brewing equipment. One such company has had an equipment malfunction and is in need of an on-site technician to quickly come and fix the problem. Joe can have several technicians employed and at any given time they can be spread out across the city. He is not sure who is closest to the company that is available to take the service call. Using a location based call, Joe can simply request to be connected to the closest available service technician to the company. This can be done by "calling the location" through GPS coordinates and have the system **100** dynamically resolve the call to a phone number of a proximate individual.

Generally described, the system **100** can provide the ability to "call a location" and be connected to a person at that location or proximity from the location despite not knowing who that specific individual is when the call is placed. As shown within **FIGURE 10****,** the system **100** can detect multiple devices **102H, 102I,102J, 102K** and **102L** within a geographic area **110** defined around a radius of the location point **108.** A device **102G** outside the area **110** can simply call the target location point **108** and the nearest device **102H, 102I, 102J, 102K** or **102L** alerts. The device **102H, 102I, 102J, 102K** or **102L** within the area **110** can answer the call.

The calling device **102G** can set the range from the target location, which specifies the circumference that an individual device **102H, 102I, 102J, 102K** or **102L** can be in to receive the call. The caller typically does not know their location. They only know the location they are calling. This can insure privacy and security. Since this uses a "predial resolution" concept, existing telephony concepts such as presence can be employed. For example, the parties who can be reached by location calling can set the presence to denote their availability to receive calls. This can add them into or take them out of the location based calling zone.

**FIGURE 11** is a flow chart depicting illustrative processes for calling a location in accordance with one or more aspects of the present disclosure. The processes can begin at **block 1100.** In some embodiments, a client interface to a server **106** that provides a "lookup" for locations that resolve to phone numbers can be provided. The client is not necessarily a separate application. It can be fully integrated into an existing application or service, such as a mobile smart phone that employs GPS and telephony services. The client actively reports its location to the location based directory server **106.** Clients are capable of querying this server **106** to obtain phone number based on location information.

At **block 1102,** the server **106** can receive a selected location point **108** from the calling device **102G.** The location can be defined through GPS coordinates, carrier location (tower), WiFi location (SSID), Bluetooth® connectivity, some combination or signal triangulation method. The client interface on the device **102G** is capable of interfacing with a location based application, such as map services. A radius for the location can be determined at **block 1104.** Depending on what is searched by the client application in connection with the server **106,** the radius can be calculated. For example, the radius for coffee shops can be smaller than the radius for home furnishing stores based on the number of stores for each out there. Alternatively, the radius can be defined by the client application on the calling device **102G.**

Using this interface, a query can be made to a location based number resolution service on the server **106** at **block 1106.** The server **106** can scan the directory and provide a list of numbers in order of proximity to the target location point **108.** For example, those devices **102H, 102I, 102J, 102K** or **102L** within the geographic area **110** shown in **FIGURE 10** can be the devices scanned in the directory. Depending on the intelligence of the client application, it can use the first number or provide for a deeper integration by allowing the caller to pull up information (e.g. contact card) for each individual in the target zone. At **block 1108,** those contacts proximate to the location can be provided to the requesting device **102G.**

The server **106** can utilize local network coverage (e.g. PBX), which can use VoIP clients over 3G/4G/LTE to reach mobile users' extensions across the globe. The server **106** can also be global in scope, employed by a carrier network **104,** for example, and using PSTN numbers to provide reachability around the globe. In some embodiments, the client device **102H, 102I, 102J, 102K** or **102L** can disable or "opt out" of reporting. When a list of contacts is received, the server **106** can ping a predefined group to obtain their location and return results at **block 1110.** The active client location reporting is not required and the contacts can be provided on demand. Connections can be made based on the found devices **102H, 102I, 102J, 102K** and **102L.** The processes can end at **block 1112.**

In a social media context, calls to anonymous individuals can be made. In this example, the "recipient" can actively report their location, for example, at a local hockey game. Those who are interested in talking to someone at the game can dial the location of the game and be connected to a person willing to participate. This can be useful for marketing and promotions. For example, consider a telephony based "Where's Waldo" game, where a radio host has prizes to give away to the first person who figures out where they are. Participants can think of the correct spot based on clues and dial the location (represented as location point **108)** to see if they can connect to the radio host. Furthermore, if the conversation was to end abruptly or on a sour note, the other party would have no way of contacting that person as the parties were connected through temporary identifications.

In some embodiments, calling a location can be integrated into a customer relations management system for service or sales organizations to get their employees to the affected customer quickly and efficiently. Calls can be video or audio in nature. For example, a consumer can call a location point **108** where the problem is occurring so they can get to the closest employee for assistance.

Generation of ring groups can be an extension to those concepts described above particularly when a set of contacts are desired. For purposes of illustration, suppose John wishes to make a call to a taxi proximate to a given location, whereby taxis within the area constitute an unknown group of individuals within the vicinity of a defined area. The first taxi answering can get business from John. To make sure John is picked up in a timely fashion, a priority ring group can be created. Higher priorities can be given to the most proximate taxis with decreasing priorities given to those taxis extending outward from John's location.

Advantageously, the system **100** provides for the ability to "dial a location" and set a proximity, i.e. a range from the location point **108,** that the ring group encompasses. The server **106** can provide the ability for parties to automatically be incorporated into the ring group based on their proximity to the target location. If there are no proximate users, the call can go to voicemail or a callback can be left.

Generally described, individuals within a pre-defined range of a location can dynamically constitute a ring group. When a location point **108** is dialed, parties within the ring group can be notified simultaneous, through priority or cascading. **FIGURE 12** is a flow chart depicting illustrative processes for ring group generation in accordance with one or more aspects of the present disclosure. The processes can begin at **block 1200.**

At **block 1202,** the system **100** can promote inclusion of devices **102** into a ring group. The method of defining the ring group can vary and be dependent on a subject matter of the ring group. For example, the subject matter of the ring group can be based on the "amount of sales", "color of car" and "amount of purchases". Other subject matters can distinguish the ring groups. For purposes of illustration, consider a typical radio show, where users qualify for a trip each week, and after several months of qualifiers, the grand winner can be selected. After the event, the ring group can receive willingness of the devices **102** to enter at **block 1204.** These qualifiers can form a dynamic ring group and the radio host can dial a single number. The first person to answer can be the winner. The ring group can be stored in the server **106** where it can be accessed by calling devices or the like. The processes can end at **block 1206.**

Ring groups can depend on a set of individuals actively broadcasting their willingness to participate in a ring group. In some embodiments, this broadcast can consist of providing their location and contact information. The mobile contact information can be withheld for security reasons and provided when required to complete a call.

As described above, the system **100** can include a centralized server **106** to track location of individuals and provide the ring group service. Typically, a client server model is used within the system **100.** A peer-to-peer connection can also be used. A client who wishes to make contact with any particular individual can dial the location and range. This dialing can be done via a web interface or directly from a device **102G** using a GPS or web based mapping system. When the request comes into the server **106,** the server **106** can scan for a list of clients in the specified range from the location. Standard ring group functionalities can then be invoked. Differing rules can be applied by configuration or by the originator to define priority, such as giving higher priority to individuals closest to the target location point **108.**

Generally, the rules formulated for the ring group, after being generated, can change inside the ring group as the number of qualified targets expands or contracts. Rules can change inside the ring group based on social media information, for example, giving preference to individuals who match an entry in their personal contacts such as friends or family. So long as the method of grouping can provide input into the system **100,** a ring group can be created with a unique identifier. This identifier can be dynamically populated into a user's phone.

A ring group can be ad-hoc and defined via clients reporting their location. The ring group can extend in a radius from the target. The order in which the group is placed can depend on proximity to the location point **108.** VoIP clients with 3G/4G/LTE and public/private wireless can be used to extend coverage to outside the typical corporate location.

In one scenario, a person can call a location of a party and mobile devices **102H, 102I, 102J, 102K** and **102L** of their friends will be alerted. In another instance, an individual's phone that has opted in for anonymous calls will ring. In either case the person is able to connect to an individual and discuss what is happening.

Ring group generation and priorities for parties associated with the ring group, as discussed in **FIGURE 12****,** can depend on their distance from the location point **108.** The target of the ring group can be transient, such that the target location changes over time. For example, John can set a ring group around a person, Jane, such that targeted individuals within 1 kilometer of that person can ring. The calling device **102G** can initiate a call to the ring group using software resident on the device **102G** to control the inclusion of contact in the ring group and the ring group model.

Conditional callbacks can be used within location calling. Typically, a conditional callback is a delayed mechanism that prompts a user for information or acceptance before initiating connectivity. The system **100** is able to facilitate a conditional offer and if an agreement is met or there is interest, a callback can be triggered, that is, the condition is fulfilled. For purposes of illustration, supposed John is in a pub and would like a taxi home. John can use a location based callback, as described earlier. However, if John is not interested in a specific cab or contact, John can query an anonymous audience in his selected area **110.** John can have $25, and if a cab is willing to take him for that amount, a connection can be made between him and that cab. As such, John can place a "context" around a callback and define the acceptance criteria.

When a conditional query is made, a variety of devices **102H, 102I, 102J, 102K** and **102L** around the location point **108** within a range can be targeted. A person accepting offers can enter the area and be notified of John's message. When they can reject it, nothing occurs. They can also read the message and reject it and nothing occurs. They can read the message and accept it and the callback can be triggered so that the parties can arrange an exchange of service. This can be a "bi-directional" service, implying that a business can offer services or a consumer can request services. For example, "I'd like a ride to downtown for $30_{"} can be left by a consumer waiting at the bus station. Likewise, a snow plow operator could offer "In your area now - $15 for your driveway", to attract patrons in his proximity who could help fill in gaps in his service schedule.

As another illustration, John can have two tickets to a game for $50 on a first come first serve bases. A message can be sent to co-workers in the vicinity, without advanced knowledge of their phone numbers. Those present in the vicinity can get the message and can reply. Conditional callbacks can combine advantages of two communication models, while being able to target a non specified group of users.

Generally described, conditional proximity callbacks can be provided where the callback originator requests information or poses a question. When a target provides an acceptable answer, the callback can be activated placing both parties in communication with each other through the system **100.** The callback can terminate after initial acceptance, or remain active until some other terminating condition is met. Advantageously, the system **100** can address a proximate audience to offer or request a service and provide an ordered queuing model by virtue of traditional call signaling models.

A callback can persist as long as a "poster" is in the area or the callback can be terminated after a first connection. Typically, there is no binding agreement between the parties. The server **106** can block caller identifications such that even after activation of the callback, the numbers of both parties remains anonymous. The callback service generally does not divulge the contact information of the callback initiator insuring privacy. A conditional callback can terminate based on an originator's location. For example, an initial query can be sent "Does anyone need anything at the store while I am here." A callback can automatically terminate when the originator of the callback leave the store since they are no longer capable of providing this service.

The conditional callback service can provide a method for an "opt in" communication that starts with a non specified message to many potential targets in a non-real time fashion, but results in the creation of a real-time communication path upon callback maturation/acceptance. The system **100** can include a location detection component, a location tracking server, a client application component, and the conditional callback component. The location detection component is capable of determining the geographical area **110** of the device **102G** hosting the client application. This can employ a carrier, WiFi, Bluetooth®, RFID, NFC, or GPS technologies, or any combination thereof, to determine a location.

The client application can be responsible for reporting the location of the client device **102H, 102I, 102J, 102K** or **102L,** and its contact identifier, to the location tracking server **106.** The client application can obtain the client location by reading it from the location detection component. It provides the location and the contact identifier to the location tracking server **106.** The location tracking server **106** can store the location and contact identity of clients that support this feature. Given a location point **108** and range, the server **106** can determine clients within the specified coverage zone.

**FIGURE 13** is a flow chart depicting illustrative processes for providing conditional callbacks in accordance with one or more aspects of the present disclosure. The processes can begin at **block 1300.** In addition to location reporting, the client application can be capable of creating a conditional callback. This is done by accessing the client application, selecting a target location point **108,** defining the range (coverage area **110)**, offering or requesting a service and optionally setting the lifespan of the callback (which may be chronological, location based or other).

For example, the mobile device's map can be selected. The user can then press the location of his work on the map, which causes a list of options to appear. One of these is "Set conditional callback". The user can select this and is prompted for the condition. At **block 1302,** the conditions can be received. The user can enter "On my way home - does anyone need a drive to Kanata?". He can then ask for a range around the location point **108,** which can be defaulted to 100 meters, for example. He is also asked for a termination condition and he selects "Departure from area" from a predefined list of option. A custom option can be provided for him. An interface can be provided that allows him to select a map and get a list of options. The interface can also include options for "call", "set callback", "set conditional callback", "subscribe for location calls", and so forth. This can be applicable to other communication functions described herein and not just conditional callbacks.

The client application can send the conditional callback information to the "conditional callback component" on the server **106** at **block 1304.** The server **106** can be responsible for managing the callback. Using the location and range, the applicable coverage area **110** can be provided to the location tacking server **106** and a list of contacts can be provided. The callback server **106** can send the conditional message to contact identifiers through their phone numbers. This list can be received by the device **102G** at **block 1306.**

While the callback is active, the callback server **106** can periodically poll the location server **106** for an updated list to identify newcomers such that they can also receive notification. In addition to periodically polling the location server **106,** notifications can also be re-sent on the same location polling interval. At **block 1308,** the conditional message can be sent to the identified contacts.

For clients that receive notifications, an option can be provided to accept, decline, or delay the condition. Declining can update the callback server **106** to prevent further transmission of messages to that client. Delaying typically does nothing and can cause the server **106** to send the notification again at the next broadcast interval. Accepting can trigger the callback between the parties. If the callback server **106** receives a message that a target has declined, their entry can be marked in the list such that it does not receive the notification again. This can be persistent for the life of the callback, implying that if the specific client leaves the target zone and returns, they are not sent another notification.

In some embodiments, if the callback server **106** receives a message that a target has accepted, it can provide the accepting parties contact identification to the originator. The originating device **102G** can then dial the accepting party. A call routing component (PBX, carrier) can provide the accepting client contact identification and the callback originator contact identification and a connection can be made. This can insure no party is directly provided the contact information.

In some embodiments, the server **106** within the system **100** can provide privacy for callbacks so that the call routing component does not provide caller identifications or other methods of end user identification. The callback originator can have the final say as to whether or not to accept the callback activation. Depending on the conditions set when the callback was created, the callback server **106** can choose to clear the callback entry. For example, if the termination/expiration condition was "first acceptance", then the callback can expire after the first callback occurs. When the expiration condition is "departure from area", then the callback can expire once the originator leaves the vicinity. Using the previous example, once the callback originator leaves the office, the callback is terminated since they are no longer able or willing to take others home once they have left the office. The processes can end at **block 1310.**

A number of variations for conditional callbacks can be provided. Conditional callbacks can be incorporated into collaborative work environments or social media tools. While the embodiments presented focused on telephony, it can use chat, email, video or other forms and models of communication. In retail sales, conditional callbacks can provide the ability to offer sales/services to local individuals. Advertising can be offered to a targeted area. Radio contests can be implemented and provide the ability to select an area of the city, pose a question and award a first caller who provides a correct answer.

**FIGURE 14** is a block diagram for providing illustrative call forwarding to a proximate device **102P** through the exemplary system **100** in accordance with one or more aspects of the present disclosure. For purposes of illustration, suppose John has a device **102N** and is busy or on a call and is unable to take other calls. Jane, who is a friend, can be sitting across from John in the pub and can take the call if it were from a mutual friend. Jim, a coworker, traveling with John on a business trip can also take the call if it was work related or from a fellow work colleague. A forwarding solution which is cognizant of John's proximate contacts and their association (friend, family, coworker) can make intelligent forwarding decisions.

In the above illustration, call forwarding was implemented when John was busy. Call forwarding can also be extended to scenarios where he is not busy. For example, "force forward to a proximate contact" can allow John to forward an alerting call to another proximate person. In addition to forwarding to an individual in proximity, the system **100** can equally offer the ability to forward the call to an individual in proximity to the originator of the call. For example, in a sales environment where a customer is calling to request a specific service, the call can be forwarded immediately to a colleague who is just around the corner from them and in a better position to visit the customer. As shown in **FIGURE 14****,** calls can be forwarded that originate from device **102M.** The sever **106** can provide the intelligent selection or the device **102N** forwarding the call can perform decision making processes as well.

Advantageously, call forwarding can allow another device **102P** to handle a call. Other forms of communication can be used as well such as text. The system **100** can allow the forwarding number to change as people move around in their daily routines/roles, independent of time or specific user location. Contacts that are proximate to the called device **102N** can be filtered based on contact class and the class of the caller. The scope of proximity can be limited to the immediate vicinity or within a larger scope. Forwarding can occur to contacts proximate to the recipient of the call or to called party contacts that are proximate to the originator of the call. Forwarding and re-routing decisions can be based on the peer or a centralized call control that is proximity aware.

Generally described, calls can be forwarded to a proximate contact. Proximity can be defined as the vicinity surrounding the recipient of the call or the vicinity surround the originator of the call, depending on the business situation or nature of the call. A forwarding address selection component, a proximity service and a call routing component can be provided. An alternative component can resolve a caller identification to a location. This can be used when the caller is not known within the contact application.

**FIGURE 15** is a flow chart depicting illustrative processes for providing call forwarding in accordance with one or more aspects of the present disclosure. The processes can begin at block **1500.** At **block 1502,** the forwarding device **102N** can receive a call from the calling device **102M.** At decision **block 1504_{,}** the forwarding device **102N** can determine whether a forwarding scenario is detected. If not, the device **102N** can take the call from the device **102M.** The processes can end at **block 1512.**

Otherwise, the call routing component on the forwarding device **102N** can activate the forwarding component when a forwarding scenario is detected or required, for example, due to the user being busy, on user demand, etc. At **block 1506,** the forwarding component can query the proximity aware contact list or service for a list of proximate devices **102P.** This can be provided on the server **106** or the device **102N** itself. The forwarding component can then apply policy, contact classifications or other criteria to select an appropriate proximate contact at **block 1508.**

At **block 1510,** the call can be forwarded to the selected contact, that is, device **102P.** When forwarding a call to a contact in proximity to the call recipient, the native contacts or centralized contacts can be queried to determine a list of proximate contacts. Additional policies can be applied, such as social grouping (friend, family, coworker, team members) to sort the list from pure proximity based to more role/function based. The corresponding match can then have the call forwarded to them. As with traditional call forwarding, a number of configuration options can exist to enable/disable/trigger the forwarding. The processes can end at **block 1512.**

As described above, a number of policies can be used to forward the call. When the caller's location can be determined, the same process can be used to carry out forwarding to a contact that is proximate to the location of the caller. The forwarding address selection component can populate with addresses of contacts in proximity to the caller, rather than those in proximity to the called party. If the caller is not a known contact, the calling party identification, phone number, can be used to request location information from the network server **106.** This information can be compared to that location with that of a known individual that can accept the call.

When the caller does not provide location based information to the network service, and other options to obtain location are not suitable, call forwarding in some embodiments is not available. However, if the location point **108** can be determined, a list of proximate contacts can be provided to the forwarding selection component. By default the closest device **102P** can be selected or additional policies can cause the forwarding component to pick the closest contact based on class association. If the caller is not recognized, it is possible on dual-mode phones to classify the call based on the number dialed, for example, if it is a work extension, it can be forwarded to the closest work contact. Numerous methods to classify and select the best proximate contact can be applied.

In the case where the calling party and called party share similar contacts, the forwarding selection component can determine if the caller is a shared contact and select proximity forwarding to a contact which shares a mutual trust. In either forwarding model, if the proximity is beyond a practical range, the call can be forwarded to voicemail or typical forms of forwarding can be applied. Forwarding can occur on demand, on no answer, on busy, on call originator location, on call destination location or on some other external decision based on dynamic or static data, for example, call forwarding to an employee with nothing scheduled in their electronic calendar. Multiple forms of communication can be forwarded.

The data structures and code, in which the present disclosure can be implemented, can typically be stored on a non-transitory computer-readable storage medium. The storage can be any device or medium that can store code and/or data for use by a computer system. The non-transitory computer-readable storage medium includes, but is not limited to, volatile memory, non-volatile memory, magnetic and optical storage devices such as disk drives, magnetic tape, CDs (compact discs), DVDs (digital versatile discs or digital video discs), or other media capable of storing code and/or data now known or later developed.

The methods and processes described in the disclosure can be embodied as code and/or data, which can be stored in a non-transitory computer-readable storage medium as described above. When a computer system reads and executes the code and/or data stored on the non-transitory computer-readable storage medium, the computer system performs the methods and processes embodied as data structures and code and stored within the non-transitory computer-readable storage medium. Furthermore, the methods and processes described can be included in hardware modules. For example, the hardware modules can include, but are not limited to, application-specific integrated circuit (ASIC) chips, field-programmable gate arrays (FPGAs), and other programmable-logic devices now known or later developed. When the hardware modules are activated, the hardware modules perform the methods and processes included within the hardware modules.

The technology described herein can be implemented as logical operations and/or modules. The logical operations can be implemented as a sequence of processor-implemented executed steps and as interconnected machine or circuit modules. Likewise, the descriptions of various component modules can be provided in terms of operations executed or effected by the modules. The resulting implementation is a matter of choice, dependent on the performance requirements of the underlying system implementing the described technology. Accordingly, the logical operations making up the embodiments of the technology described herein are referred to variously as operations, steps, objects, or modules. It should be understood that logical operations can be performed in any order, unless explicitly claimed otherwise or a specific order is inherently necessitated by the claim language.

Various embodiments of the present disclosure can be programmed using an object-oriented programming language, such as SmallTalk, Java, C++, Ada or C#. Other object-oriented programming languages can also be used. Alternatively, functional, scripting, and/or logical programming languages can be used. Various aspects of this disclosure can be implemented in a non-programmed environment, for example, documents created in HTML, XML, or other format that, when viewed in a window of a browser program, render aspects of a GUI or perform other functions. Various aspects of the disclosure can be implemented as programmed or non-programmed elements, or any combination thereof.

The foregoing description is provided to enable any person skilled in the relevant art to practice the various embodiments described herein. Various modifications to these embodiments will be readily apparent to those skilled in the relevant art, and generic principles defined herein can be applied to other embodiments. Thus, the claims are not intended to be limited to the embodiments shown and described herein, but are to be accorded the full scope consistent with the language of the claims, wherein reference to an element in the singular is not intended to mean "one and only one" unless specifically stated, but rather "one or more." All structural and functional equivalents to the elements of the various embodiments described throughout this disclosure that are known or later come to be known to those of ordinary skill in the relevant art are expressly incorporated herein by reference and intended to be encompassed by the claims. Moreover, nothing disclosed herein is intended to be dedicated to the public regardless of whether such disclosure is explicitly recited in the claims.

## Claims

1. A method for communicating with at least one device comprising:
defining a location;
identifying at least one device within range of the location; and
providing at least one of a plurality of communication functions to the at least one device.

2. The method of claim 1, comprising expanding the range after a period of time.

3. The method of claim 1 or claim 2, comprising recording a voicemail associated with the location and wherein providing the at least one of the plurality of communication functions to the at least one device comprises sending the voicemail to the at least one device when the at least one device enters within the range.

4. The method of claim 1 or claim 2, comprising establishing a callback for an originating device and wherein providing the at least one of the plurality of communication functions to the at least one device comprises triggering the callback to the originating device when the at least one device is within the range and establishing a call between the originating device and the at least one device.

5. The method of any preceding claim, wherein defining the location comprises receiving coordinates of the location in a call and wherein identifying the at least one device within the range comprises determining a number of the at least one device proximate to the location.

6. The method of any preceding claim, comprising forming a ring group from devices identified within the range.

7. The method of any preceding claim, wherein providing the at least one of the plurality of communication functions to the at least one device comprises forwarding communications to a device proximate to the at least one device.

8. The method of any preceding claim, wherein identifying the at least one device within the range comprises providing at least one condition to a number of devices within the range and receiving acceptance of the at least one condition from the at least one device.

9. A system comprising:
a voicemail server providing communications associated with a location; wherein the communications are established beforehand and provided to at least one device entering within proximity of the location and optionally wherein the at least one device is targeted and/or wherein the communications are forwarded to a voicemail box associated with the location.

10. A device comprising:
at least one processor; and
a memory operatively coupled to the processor, the memory storing program instructions that when executed by the processor, causes the processor to:
define a location;
detect whether a device is within proximity of the location;
provide at least one of a plurality of communication functions to the device.

11. The device of claim 10, wherein providing the at least one of the communication functions to the device comprises:
receiving a callback request from an originating device; and
triggering the callback when the device is detected within the proximity to establish communications and optionally wherein the location is defined by a position of the originating device.

12. The device of claim 10 or claim 11, wherein providing the at least one of the communication functions to the device comprises:
receiving a call defining the location; and
resolving the call to a phone number for the device proximate to the location defined by the call and optionally wherein resolving the call comprises selecting the phone number for the device from a list of numbers.

13. The device of any of claims 10 to 12, wherein providing the at least one of the communication functions to the device comprises:
defining a ring group corresponding to devices detected within the proximity of the location; and
alerting the devices.

14. The device of any of claims 10 to 13, wherein providing the at least one of the communication functions to the device comprises forwarding communications from the device to a proximate contact and optionally wherein forwarding the communications comprises applying policies to determine the proximate contact.

15. The device of any of claims 10 to 14, wherein the memory storing program instructions, when executed by the processor, causes the processor to receive conditions for selecting the device.
